# EUROPEAN PATENT APPLICATION

(11) **EP 0 803 674 A2**
(43) Date of publication of application: **29.10.1997**
(21) Application number: 97302766.7
(22) Date of filing: 23.04.1997
(51) Int. Cl.: F16K 35/10, F16K 35/02

(54) **Valve lock**

(30) Priority: 26.04.1996 GB 9608712
(71) Applicant: Smith Flow Control Limited, Witham, Essex CM8 3YQ (GB)
(72) Inventor: Cooper, Frank Robert, St. Osyth, Clacton-on-Sea Essex C016 8JB (GB)
(74) Representative: Lamb, Martin John Carstairs

(57) **Abstract**

A valve lock, comprising:
clamping means (2) for clamping to a pipe and/or pipe flange of a valve,
linking means (3,8) engageable with the camping means and engageable with an actuator member (10) of a valve to which the clamping means is clamped, and
lockable means (4) for preventing movement of the actuator member with respect to the clamping means, when the linking means is engaged with the valve actuator member, to prevent actuation of the valve.

## Description

The present invention relates to a valve lock.

Valve locks are frequently used to prevent unauthorised operation of valves, cocks or other control elements in pipes and piping systems. The term "valve" will be used collectively hereinafter to describe any such control elements.

In such valves, an operating handle or actuator member normally projects from a suitable housing. It is common practice to design a valve lock which is securable to the valve housing and specially designed for the valve housing. Such customised valve locks have to be redesigned for every separate design of valve, which is an expensive process

The present invention provides a valve lock, comprising:
clamping means for clamping to a pipe and/or pipe flange of a valve,
linking means engagable with the clamping means and engageable with an actuator member of a valve to which the clamping means is clamped, and
lockable means for preventing movement of the actuator member with respect to the clamping means, when the linking means is engaged with the valve actuator member, to prevent actuation of the valve.

All valve fittings and valves are integral with or connected to a pipe and/or a flange for connection to a pipe, vessel or part of a piping system. The diameter of the pipe and the diameter or width of the flange will be of a size specified by international standards or within a specified range of such a size. The inventors have realised that a relatively small number of sizes of clamping means may be designed. For any commercial pipe or flange, at least one of the designs of clamping means will be of a suitable size.

In the clamping means of the invention, surfaces are provided which may be urged towards one another by suitable means, so that a specified part of a standard pipe or flange can be gripped between the respective surfaces of the clamping means. No prior preparation or interference with the pipe or flange is required. The clamping means may accordingly be suitable for fitting to any existing valve or valve system without modification of the valve or the clamping means. The valve lock may be applied with the valve in situ in a piping system.

For any given standard size and shape of pipe flange or pipe, the present invention may provide a valve lock as described above, in which the clamping means comprises a plurality of clamping surfaces which, in a first position, define a space which is greater than the dimensions of the standard pipe or flange and which can be urged into a second position in which the clamping surfaces will engage with the outside of a standard valve or flange. It has been found that the friction between the clamping means and the outside of the pipe or flange will generally be sufficient to prevent movement of the clamping means when in position. Adjustable means may be provided in the clamping means for increasing the load urging the clamping surfaces into contact with the pipe or flange to thereby ensure that appropriately high frictional contact can be achieved. It is envisaged that valve locks comprising a clamping means which has auxiliary means for fixing the clamping means to the pipe or flange, such as adhesive or mechanical connections such as locks or screws, may fall within the scope of the invention if the friction between the clamping means and/or the structural stability of the valve lock when in position provided by the simple abutting contact of the clamping surfaces with the valve flange or pipe play a major part in the locking action of the valve lock.

Pipes and flanges are normally circular in cross-section and of a diameter of a specified size or within a specified range of such a specified size, for example, British Standard BS10, German Standards DIN 2534, DIN 2544. Preferably, the clamping means is for engaging the outer circumferential surface of such a circular pipe or flange. Preferably the clamping means comprises a broken generally circular loop having adjustable and releasable connecting means between its respective ends. The loop material is preferably sufficiently flexible so that, under the loads applied to the loop to give good frictional contact with the circumferential surface of the pipe or flange, the loop will elastically deform to substantially follow the circumferential shape of the pipe or flange. Such a loop can be passed over a pipe or flange with the ends of the loop disconnected without having to disconnect the pipe from the system. The ends of the loop can then be connected by the releasable connecting means and drawn together so that if the loop is of the correct size, it will grip the exterior of the pipe or flange. The loop may have been broken in more than one place, preferably two places.

This arrangement gives a particularly secure frictional grip of the outside of the flange or pipe when appropriate tension is applied. The loop can conform closely to the surface of the flange providing no spaces for clogging with dirt or insertion of tools by people trying to operate the valve without authority.

The clamping means may be perforated for flange ventilation if the host flanges leak.

The loop is preferably comprised of a generally rectangular section strip of metal, preferably steel. The cross sectional dimensions of the section may be 40 mm x 3 mm.

Where the clamping means comprises a loop engageable with the outer circumferential surface of a flange or pipe, the releasable adjustable connecting means preferably comprises a connection which will not become loosened by thermal-expansion of the loop material. For example, the ends of the loop may be connectable by a biasing means such as a spring, preferably with a relatively low spring constant. A relatively low spring constant will mean that movements of the loop size due to thermal expansion (such as 1mm) will lead to a relatively small decrease in the clamping force applied by the resilient means to the loop.

One end of the loop may be connected to an upstanding bearing member having a bearing face directed away from the gap between the loop ends, the bearing face having a bore extending therethrough, the other end of the loop being connected to a rod member for extending through the bore and having a head part projecting radially from the rod part for engaging the bearing surface, a bevel washer being provided between the head part and the bearing surface. A bevel washer comprises a washer whose shape is that of a frusto conical surface of a cone having a very flat cone angle. A bevel washer can be compressed elastically along its axis, for example by 1-2 mm. It has been found that such a washer has sufficient movement to accommodate variations in size of the loop due to thermal expansion and to place the loop ends under sufficient tension for the loop ends to remain in position. For example a tension of around 0.2-2 tonne force, preferably 0.5-1.2, most preferably 1 tonne force (circa 10,000 N) may be exerted on the ends of the loop. Preferably, the rod part has a threaded end with a bolt forming the head part screwable thereon whereby tension can be applied to the loop ends. Preferably, the second end of the loop also comprises a bearing surface and a bevel washer. The bearing surface(s) may be located in a recess(es), the recess being closable by lockable means to restrict access to the bolt head when in position. For example, an anti-tamper screw may be provided extending across the end of the rod part or head part.

Preferably, the lockable means prevents operation of the valve actuator member by preventing movement of the linking means with respect to the clamping means in a direction that would allow the actuator member to be operated.

The linking means may be rigidly fixed, movably fixed or removably fixed to the clamping means. The linking means may comprise a rigid member, such as a bar, or a flexible member, such as a chain. The linking means may be of variable length, having for example an internal ratchet or screw arrangement. This will allow differing positions of valve actuator member with respect to valve flange or pipe to be accommodated. Preferably there are means for locking the dimensions of a linking means whose length can be adjusted to prevent release of the valve lock unintentionally.

The linking means may be engageable with a valve actuating member by any suitable device. For example, a simple hook may be provided. For example, it may be arranged that the locked position of the valve lock corresponds to the linking means engaging a part of the valve actuating member in that position in the path of movement of the part of the valve actuating member which is closest to the locking means.

Preferably, however, the linking means has means for engaging a valve actuating member which will prevent movement of the linking means with respect to the valve actuating member or will only permit movement of the linking means with respect to the valve actuating member when the lockable means is unlocked. For example, where the valve actuator member contemplated comprises a linearly extending handle, the linking means may comprise a sleeve for fitting over the handle and comprising gripping means for gripping the handle in a manner which can be fixed, for example by a lock or by tamper proof screws.

The locking means may lock the linking means to the clamping means or the linking means to the actuator. It may be such that, when locked, it allows movement of such parts with respect to one another only in directions not corresponding to the valve actuating direction. Many known locking means are already available and any such known locking means may be used.

The present invention is suitable for use with any type of valve, for example quarter turn valves such as plug and ball valves, butterfly valves etc. The linking means may be designed to suit any particular type of valve. For example, a simple shackle will suffice in the case of a 90° operation valve, or a disk rotatable with the handle of the valve in the unlocked state may be provided.

The linking means may comprise a link body having a slot extending therethrough, and one or more means for fixing to the clamping means or actuator member, the fixing means being slidably engaged in the slot, the fixing means being securable with respect to the link body. For example, a screw may be mounted on one of the fixing means or link body, for generating frictional engagement between the fixing means and the link body, or between the screw and one of these members. Preferably, the slot in the link body communicates with a second slot of narrower width, the second slot extending in the longitudinal direction of the link body and extending between the slot and an outside surface of the link body, a nut and bolt being provided, the bolt head or nut being retained in the slot and being of greater dimensions than the width of the second slot, the nut and bolt being retained in a bore on the fixing means, whereby the fixing means may be fixed with respect to the link body by tightening the nut and bolt so as to grip the walls of the slot.

The means for engaging the actuating member of the valve may comprise a bearing plate for engagement with the actuating member, the bearing plate having linearly extending channels formed in the edges thereof, stirrup means being provided having extensions engaged in and slidable along the channels and being provided with means for engaging the other side of the valve actuating member to the bearing plate. Preferably, the means for engaging the valve actuating member in the stirrup comprises a screw (preferably a tamper proof screw) screwable through a threaded bore in the stirrup.

The invention will be further described by way of example only with reference to the accompanying drawings in which:
Figure 1 shows a valve lock according to the invention;
Figure 2 shows the valve lock of figure 1 fixed onto a valve;
Figure 3 shows the valve lock and valve of figure 2 in the open position;
Figure 4 shows the valve of figure 3 in side elevation;

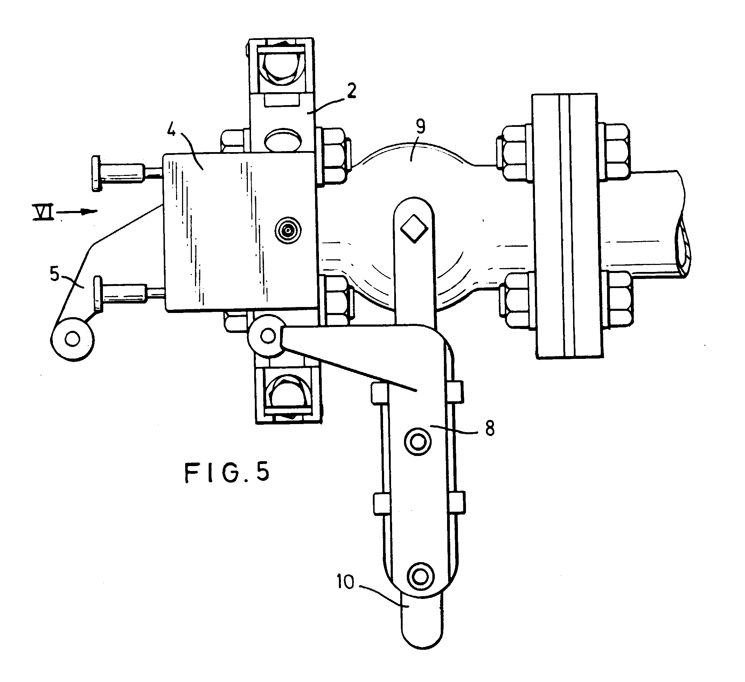

Figure 5 shows the valve lock of figure 2 with the linking means removed;
Figure 6 shows the valve and valve lock of figure 5 as seen in the direction of arrow VI;
Figure 7 is a detailed view, at enlarged scale, of the connection between the ends of the loop;
Figure 8 is a sectional view of the bolt, nut and bevel washer;
Figure 9 shows the means for engaging the handle of the valve, at an enlarged scale, as seen in section through the line VIII-VIII of Figure 2;
Figure 10 shows a cross sectional view through the linking means, with one link in position, and
Figure 11 is a schematic side view of a valve lock according to the invention engaged with a pipe.

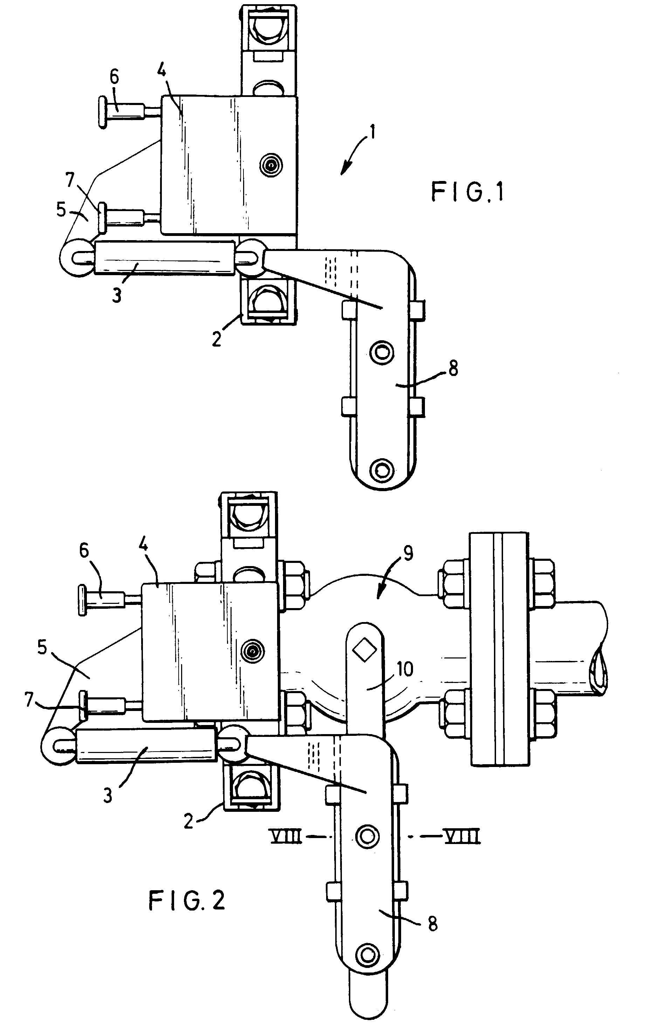

In Figure 1, a valve lock 1 is shown, which comprises according to the invention, clamping means in the form of a broken loop 2 which will be described further below, linking means 3 for engagement with an actuator member a valve and lockable means 4 which has a projecting arm 5 which is connected to the linking means 3. Keys 6 and 7 are shown for actuating the locking means to prevent or allow movement of the arm 5 and thereby to control movement of a valve actuator member which is connected to the linking means 3. The linking means 3 has means 8 for engagement with a valve actuator member which will be further described below.

Figure 2 shows the valve of figure 1 connected to a quarter turn ball valve 9. The clamping means 2 is shown clamped to a flange of the ball valve and the linking means 3 is shown fixed in position on a valve actuator member or handle 10. Figure 2 shows the valve in the closed position.

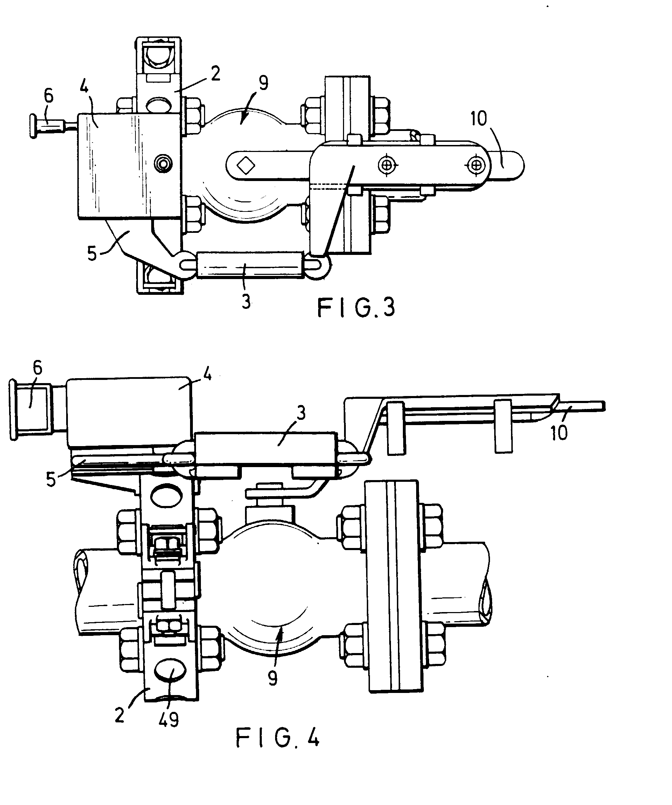

Figure 3 shows the valve of Figure 2 locked in the open position. One of the keys 5 has been removed to prevent rotation of the arm 5 and of the handle 10 via the linking means 3.

The locking means is not shown in detail. The internal workings of the locking means may correspond to any known suitable lock.

It can be seen in figure 4 that the clamping means 2 is ventilated or perforated with holes 49 for preventing build up of pressure caused by flange leakage.

The linking means 3 is a variable length device flexibly connected to the arm 5 and the handle engaging means 8 by hooks at either end. It will be described further below.

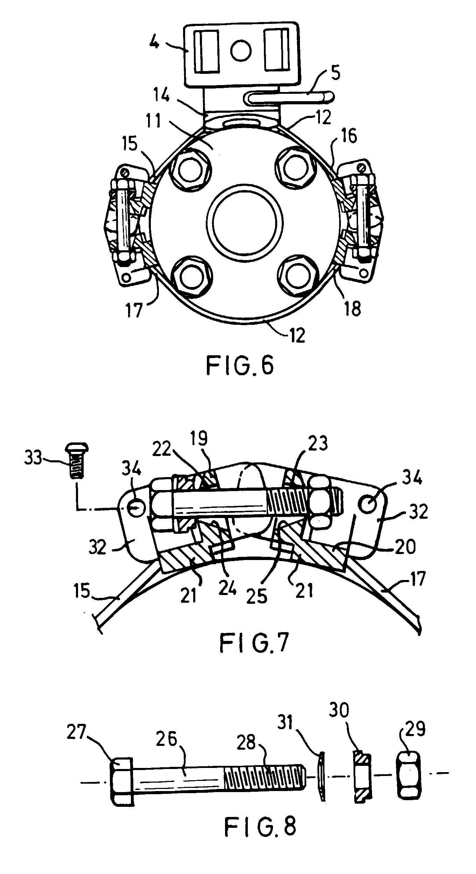

The clamping means is shown in side view in position on the flange in Figure 6. The clamping means 2 comprises a strip broken in two places to define strip sections 12 and 13 which engage the outer periphery of the flange 11. The top strip section 12 passes through a channel 14 formed in the base of the locking means 4 whereby the locking means 4 is securely held against the valve flange 11. The respective ends 15, 16 and 17, 18 of the strip sections 12 and 13 are connected by connecting means which is shown at a greater scale and in more detail in figure 7 and figure 8.

The strip ends 15 and 17 are shown engaged with bearing members 19 and 20. The engagement may be by screwing welding or any other suitable technique. Each member 19 and 20 comprises a foot 21 for engagement with the flange surface and an upstanding part having a bearing surface 22, 23. The bearing surfaces are frustoconical in shape and have a coned bore 24, 25 passing therethrough to the apex of the frustoconical shape. A bolt having a rod part 26, an integral head 27 and a threaded part 28 for engagement with a nut 29 is provided for engagement through the coned bores 24 and 25. At one end of the bolt, the bearing surface is engaged by a rigid washer 30. Sandwiched between the rigid washer 30 and the integral bolt head 27 (or equivalently, the nut 29) is a bevel washer 31 as shown in figure 8.

The bevel washer 31 comprises a washer which defines a frustoconical surface of a cone with a very wide cone angle. The bevel washer 31 may be compressed elastically in its axial direction. This ensures that a resilient means is incorporated in the connecting means whereby expansion of the strips 12 and 13 may occur without substantial reduction in the load applied by the strips to the flange 11.

A bevel washer which compresses under a total load of about 1 ton (10,000 N) is provided.

The members 19 and 20 also comprise ears 32 surrounding the integral head or bolt head 29 whereby these can be protected from tampering. To prevent access to the integral head 27 or nut 29, tamper proof screws 33 may be engaged extending across the ends of the bolt through bores 34.

In use, at least one of the connecting means is disconnected by unscrewing the bolt. Then the split parts 12 and 13 are engaged with the edge of the flange and the bolt reinserted and tightened. The or both bolts may be tightened to adjust the load on the flange 11. When the correct tension is achieved, tamper proof screws may be engaged in the bores 34 to prevent unauthorized access to the bolt heads. Then the linking means and actuator engaging means can be put in position and the valve locked in the open or closed position.

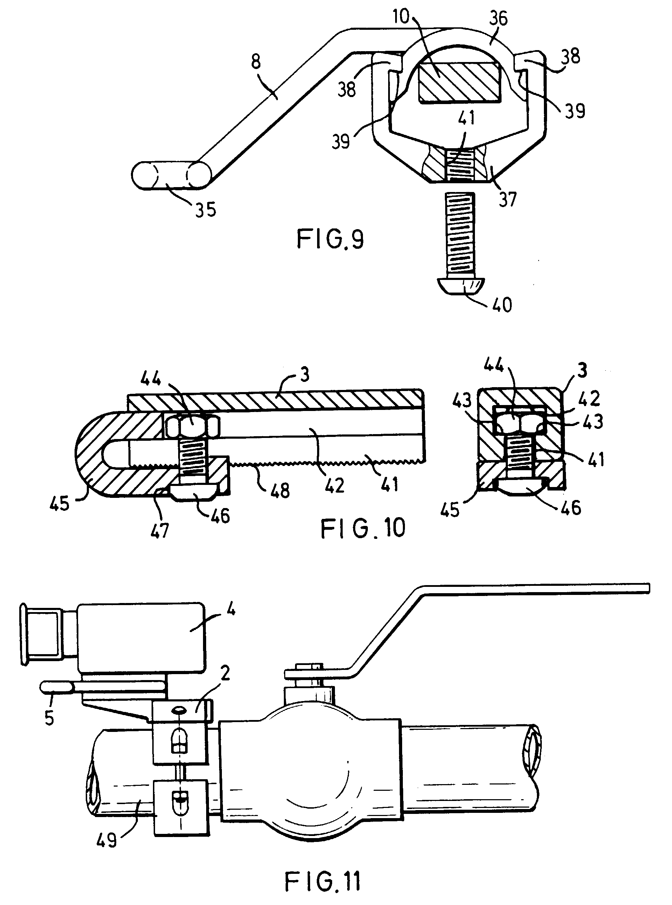

Figure 9 shows the valve actuator engaging means 8. At one end, it has a loop 35 for engagement with the linking means 3. At the other end it has a bearing plate 36 for engagement with the handle 10 (seen in cross section, diagonally hatched). A plurality of stirrups 37 are provided, one of which is seen in Figure 9. The stirrups have inward turned ends 38 for engagement in a groove running along each side of the bearing plate 36. Bores 41 are provided in the stirrups 37 which are engageable with tamper proof screws 40. The tamper proof screws 40 are screwed into contact with the undersurface of the handle 10 to grip it firmly and to provide a rigid, secure grip on the handle 10.

The curved inner space of the bearing plate 36 is wide enough and deep enough to engage any known size of handle. The stirrups can be positioned at any suitable position along the groove 38 which extends along the length of the bearing plate 36, so that any normal length of handle can be engaged. Any normal depth of handle can be engaged, the depth to which the tamper proof screws 40 are screwed in being freely variable.

Figure 10 shows the linking means 3 in cross section. The linking means 3 comprises a longitudinally extending member having a slot 41 extending along its length communicating with a wider slot inside the linking means 3 42. A nut 44 can be received in the slot 42 bearing against the shoulders 43 and slidable along the length of the slot 42. Fixing means in the form of a hook 45 is shown which extends from the slot 42 at one end of the linking means 3. The hook is for engaging the clamping means or valve actuator engaging means. The distance at which the hook extends from the linking means 3 can be altered by sliding it along the slot 42. It is fixed in position by a tamper proof screw 46 which projects through a bore 47 in one end of the hook through the slot 41 to engage with the nut 44. By tightening the screw 46, the nut is forced into a gripping frictional contact with the shoulders 43 which prevents sliding movement of the hook 45. To aid gripping, the undersurface 48 of the linking means 3 has a ribbed or roughened surface.

Figure 11 is a schematic view of a locking means according to the invention (with the linking means missing) engaged with a pipe 49 instead of with a pipe flange.

## Claims

1. A valve lock, comprising:
clamping means for clamping to a pipe and/or pipe flange of a valve,
linking means engagable with the clamping means and engageable with an actuator member of a valve to which the clamping means is clamped, and
lockable means for preventing movement of the actuator member with respect to the clamping means, when the linking means is engaged with the valve actuator member, to prevent actuation of the valve.

2. A valve lock according to Claim 1, in which the clamping means comprises a plurality of clamping surfaces which, in a first position, define a space which is greater than the dimensions of the standard pipe or flange and which can be urged into a second position in which the clamping surfaces will engage with the outside of a standard pipe or flange.

3. A valve lock according to Claim 1 or 2, wherein the clamping means is for engaging the outer circumferential surface of such a circular pipe or flange.

4. A valve lock according to Claim 3 wherein the clamping means comprises a broken loop having adjustable and releasable connecting means between its respective ends.

5. A valve lock according to Claim 4 wherein the loop material is preferably sufficiently flexible so that, under the loads applied to the loop to give good frictional contact with the circumferential surface of the pipe or flange, the loop will elastically deform to substantially follow the circumferential shape of the pipe or flange.

6. A valve lock according to Claim 4 or 5 wherein the ends of the loop are connectable by a biasing means such as a spring.

7. A valve lock according to Claim 6, wherein one end of the loop is connected to an upstanding bearing member having a bearing face directed away from the gap between the loop ends, the bearing face having a bore extending therethrough, the other end of the loop being connected to a rod member for extending through the bore and having a head part projecting radially from the rod part for engaging the bearing surface, a bevel washer being provided between the head part and the bearing surface.

8. A valve lock according to any preceding Claim wherein the linking means comprises a link body having a slot extending therethrough, and one or more means for fixing to the clamping means or actuator member, the fixing means being slidably engaged in the slot, and securable with respect to the link body.

9. A valve lock according to Claim 8, wherein the slot in the link body communicates with a second slot of narrower width, the second slot extending in the longitudinal direction of the link body and extending between the slot and an outside surface of the link body, a nut and bolt being provided, the bolt head or nut being retained in the slot and being of greater dimensions than the width of the second slot, the nut and bolt being retained in a bore on the fixing means, whereby the fixing means may be fixed with respect to the link body by tightening the nut and bolt so as to grip the walls of the slot.

10. A valve lock according to any preceding Claim, wherein means for engaging the actuating member of the valve comprises a bearing plate for engagement with the actuating member, the bearing plate having linearly extending channels formed in the edges thereof, stirrup means being provided having extensions engaged in and slidable along the channels and being provided with means for engaging the other side of the valve actuating member to the bearing plate.
